(19) Europäisches Patentamt / European Patent Office / Office européen des brevets

(11) **EP 2 824 141 B1**

(12) **EUROPEAN PATENT SPECIFICATION**

(45) Date of publication and mention
of the grant of the patent:
**22.06.2016 Bulletin 2016/25**

(51) Int Cl.:
***C08L 23/00*** *(2006.01)*     ***B29C 45/00*** *(2006.01)*

(21) Application number: **13175651.2**

(22) Date of filing: **09.07.2013**

(54) **USE OF A POLYOLEFIN COMPOSITION TO REDUCE SINK MARKS**

VERWENDUNG EINER POLYOLEFINZUSAMMENSETZUNG ZUR REDUZIERUNG VON EINFALLSTELLEN

UTILISATION D'UNE COMPOSITION DE POLYOLÉFINE POUR RÉDUIRE LES RETASSURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.01.2015 Bulletin 2015/03**

(73) Proprietor: **Borealis AG**
**1220 Vienna (AT)**

(72) Inventors:
• **Schiesser, Stefan**
**4030 Linz (AT)**
• **Kona, Balakantha rao**
**Abu Dhabi (AE)**
• **Hauer, Andreas**
**4202 Kirchschlag (AT)**
• **Kirchberger, Manfred**
**4731 Prambachkirchen (AT)**

• **Gsellmann, Günter**
**4222 St. Georgen/Gusen (AT)**

(74) Representative: **Lux, Berthold**
**Maiwald Patentanwalts GmbH**
**Elisenhof**
**Elisenstraße 3**
**80335 München (DE)**

(56) References cited:
**EP-A1- 0 677 369**     **EP-A2- 0 232 522**
**EP-B1- 1 358 266**     **US-A- 4 002 595**
**US-A- 4 038 042**     **US-A- 6 077 907**
**US-A1- 2002 132 100**

• **KOCH ET AL: "Evaluation of scratch resistance in multiphase PP blends", POLYMER TESTING, ELSEVIER, AMSTERDAM, NL, vol. 26, no. 7, 27 September 2007 (2007-09-27), pages 927-936, XP022276380, ISSN: 0142-9418, DOI: 10.1016/J.POLYMERTESTING.2007.06.006**

**EP 2 824 141 B1**

**Description**

The invention relates to the use of a polyolefin composition to reduce sink marks in injection moulded articles.

Thermoplastic materials and particularly polypropylenes, are often used to produce shaped articles by means of the injection moulding technique. During the injection moulding process, the thermoplastic material is fed to a heated barrel in the injection moulding machine, mixed and transported to a mould. The mould is filled, normally under pressure, with the thermoplastic material. Thereafter the mould with the thermoplastic material inside is allowed to cool down upon which the thermoplastic material takes the form/ shape of the cavity in the mould. During the cooling down, often sink marks are formed that can only be observed after that the article is released from the mould cavity. A sink mark is a local surface depression in the article. Generally, a sink mark is formed in regions of an article where thicker sections are present or at locations above ribs or bosses for example.

Sink marks are undesirable from various points of view, such as for example from aesthetic or hygiene perspective. When the appearance of the injection moulded article is important, such as for example in a consumer product or as an external surface of a domestic or office appliance, sink marks are undesirable while the consumer connects a less appealing appearance of the article with a lesser quality product. From a hygiene point of view, sink marks are also undesirable while sink marks, by their nature, cause the total surface to be irregular and rough. A rough and/or irregular surface can lead to damage to other articles that come into contact with the article with the sink marks, for example leading to scratches. On the other hand, the irregularity of the surface can lead to injuries to people handling these articles. Additionally the roughness makes it more difficult to adequately and thoroughly clean the surface containing the sink marks. Thorough cleaning is important when the article comes into contact with for example food or medicine and/or where sterile conditions are required.

Polypropylene is often used for the production of articles with the injection moulding technique. Polypropylene has several properties that make it very suitable for this, such as for example, its good strength- toughness combination, low cost and ease of fabrication. Further a large variety of grades and types is available which makes it possible to select the most appropriate material. However, the material has also disadvantages such as for example poor transparency and low impact strength. Therefore EP-1.358.266 suggests improving these properties by adding an ethylene homopolymer or an ethylene/ α-olefin copolymer to a heterophasic propylene/ α-olefin copolymer.

Koch and Machl describe in Polymer Testing, 26 (2007), 927-936, that the scratch resistance of multiphase PP/EPR blends can be improved by the addition of polyethylene. However, although scratch resistance is important from the aesthetical point of view just as sink marks are, scratch resistance and sink marks occur under completely different situations and conditions. Scratch resistance comes into play when the article is in use and when the article is subjected to external forces, such as for example sharp objects that hit the article. Sink marks are formed at the time when the article itself is formed, namely during the injection moulding process. After the article has left the moulding machine and is in use for its intended purpose, sink marks are not generated any more. Scratch resistance plays a role in the daily life of an article, while sink marks play only a role during its creation. Sink marks therefore occur under much more severe conditions, such as for example high temperatures and high pressures. Thus different forces, completely different mechanisms and different situations wherein the effect occurs, play a role in the creation and occurrence of sink marks and scratches. Therefore the suggestions given in the prior art to improve the scratch resistance properties of polypropylene compositions cannot be applied to solving the problems that give rise to sink marks.

EP 0 232 522 A2 relates to a polypropylene resin composition which provides moulded articles having superior rigidity, resistance to heat distortion, resistance to secondary deformation, resistance to sink mark forming and resistance to warpage deformation when the articles are made therefrom.

US 2002/0132100 A1 relates to a process for preparing light weight objects by calendering, extrusion, blow or injection moulding polypropylene, polystyrene or high density polyethylene resins into which thermally expandable microspheres have been admixed.

US 4,002,595 and US 4,038,042 relate to plastic compositions which are directly electroplatable which are based on low cost polypropylene-based compositions.

EP 0 677 369 A1 relates to a method of injection moulding which prevents the generation of surface defects. The method leads to products having a front surface free from defects such as sink marks or weld lines.

Therefore there exists still a clear need for a solution to the problem of the occurrence of sink marks in injection moulded articles, which solution would result in articles whose surfaces do not display sink marks or at least to a lesser extent than prior art articles.

This object has surprisingly been reached by using in the production of injection moulded articles a polymer composition which comprises: A1) at least one polypropylene polymer selected from propylene homopolymer, copolymers of propylene and ethylene and co-polymers of propylene, ethylene and/or one or more alpha-olefins with 4 to 18 carbon atoms, wherein the amount of propylene in the co-polymers is at least 80 wt%,and

A2) at least one polyethylene polymer, wherein the polymer composition does not contain any other polymer than the polypropylenes A1 and the polyethylenes A2 and the total amount of polypropylene is at least 50 wt% based on the sum of the polypropylene polymer A1 and the polyethylene polymer A2 in the composition.

According to another preferred embodiment of the present invention, the use is characterised in that the composition comprises at least 60 wt% of polypropylene polymer A1 and at most 40 wt% of polyethylene polymer A2, the amount being based on the sum of A1 and A2 present in the polymer composition.

According to another preferred embodiment of the present invention, the use is characterised in that polypropylene polymer A1 comprises at least one copolymer of propylene and ethylene or at least one copolymer of propylene, ethylene and one or more □-olefins with 4-18 carbon atoms.

According to another preferred embodiment of the present invention, the use is characterised in that the at least one polypropylene copolymer is a block copolymer.

According to another preferred embodiment of the present invention, the use is characterised in that the at least one polypropylene polymer has a MFR (230°C, 2.16 kg) of 20-30 g/10min.

According to another preferred embodiment of the present invention, the use is characterised in that the at least one polyethylene polymer has a MFR (190°C, 2.16 kg) of 5-50 g/10min.

According to another preferred embodiment of the present invention, the use is characterised in that the density of the polyethylene is 940-970 $kg/cm^3$ (ISO standard 1183A).

According to another preferred embodiment of the present invention, the use is for the production of an injection moulded part of a consumer product.

It has been found that by using a composition of at least one polypropylene and at least one polyethylene, the problem of sink marks in an injection moulded article is overcome or at least noticeably reduced.

An additional advantage of the present invention is that it makes it possible to replace ABS (Acrylonitrile Butadiene Styrene) in injection moulded articles. ABS is used in many application fields, such as for example in automotive parts, electrical and computer housings and household applications. Until now, polyolefins were not able to replace ABS although polyolefins are, both from a product point of view as well as from a processing point of view, generally cheaper. Energy consumption during injection moulding of polyolefins is for example lower than with ABS and as the clamping force can be lower with polyolefins than with ABS, smaller machines can be used, which are consuming less energy than larger injection moulding machines. Further, generally, articles made out of polyolefins weigh less than the same type of article made out of ABS, consume less material and are thus cheaper and are environmentally less disadvantageous than the articles out of ABS. Another advantage of the use of polyolefins compared to ABS is that recycling is easier with polyolefins than with ABS and long time durability is generally better with polyolefins than with ABS. Therefore it is a great advantage to be able to use polyolefins, more particularly polyethylene and polypropylene, instead of ABS in injection moulded articles for all kind of end uses.

In the past the use of polyolefins instead of ABS was not possible due to the superior appearance of ABS in injection moulded parts. Now that the appearance is improved for injection moulded parts made out of a polymer composition comprising at least one polypropylene and at least one polyethylene, injection moulded parts previously only made out of ABS can now also be manufactured from this advantageous polymer composition. This opens up all the advantages of a polyolefin composition as described above.

The composition that is being used to reduce sink marks in an injection moulded article comprises at least one polypropylene polymer A1. When the polypropylene polymer A1 comprises more than 1 type of polyproylene, the properties given below apply for all the polypropylene polymers in the polypropylene polymer A1.

The polypropylene that is used is chosen from propylene homopolymers, copolymers of propylene and ethylene or copolymers of propylene, ethylene and/or one or more α- olefins with 4-18 carbon atoms. The α- olefin with 4-18 carbon atoms can for example be 1-butene, 1-hexene or 1-octene. When an α- olefin is used as a comonomer, preferably 1-butene is used. It is preferred to use a copolymer of propylene over a homopolymer of propylene.

In the copolymers, the amount of propylene is at least 80 wt%. Preferably the amount of propylene in the copolymer is at least 90 wt%, more preferably at least 95 wt%, even more preferably at least 97 wt%. The amount of propylene in the copolymer should not exceed 99.9 wt%, preferably it should not exceed 99.5 wt%, more preferably it should not exceed 99.0 wt%, most preferably it should not exceed 98.5 wt%. A preferred range for the propylene in the copolymer is between 95.0 and 99.0 wt%, preferably between 97.0 and 98.5 wt%, more preferably between 97.3 and 98.3 wt%, most preferably between 97.7 and 97.9 wt%. In these mentioned ranges the borders are regarded to be included. The comonomer can be randomly distributed along the polymer chain, generating a random copolymer (PP-RACO) or it can be distributed as blocks, generating a block copolymer. It is preferred to use in the invention a block-copolymer.

In the copolymers of propylene as used in the invention, preferably ethylene is the only comonomer next to propylene, resulting in the formation of a propylene- ethylene copolymer. The amount of ethylene in the preferred ethylenepropylene copolymer is generally between 1 and 5 wt%, preferably between 1.5 and 3 wt%, more preferably between 1.7 and 2.7 wt%, most preferably between 2.1 and 2.3 wt%. The amount of ethylene incorporated into the copolymer can be determined by infrared spectroscopy.

Quantitative Fourier transform infrared (FTIR) spectroscopy was used to quantify the amount of ethylene comonomer. Calibration was achieved by correlation to comonomer contents that were determined by quantitative nuclear magnetic resonance ($^{13}$C-NMR) spectroscopy (Thermochimica Acta, 66 (1990), 53-68).

The FTIR spectrum was obtained of a thin film pressed of the propylene- ethylene copolymer. The film has a thickness of about 200- 450 $\mu$m. To determine the total ethylene content the area of the methylene absorption peak is measured. The amount of comonomer (N) was determined as weight percent (wt%) via:

$$N = k_1 \frac{A}{R} + k_2$$

wherein A is the maximum absorbance defined of the comonomer band, R is the maximum absorbance defined as peak height of the reference peak and $k_1$ and $k_2$ are the linear constants obtained by calibration. The band used for ethylene content quantification is selected depending on the ethylene content being random (730 cm$^{-1}$) or block-like (720 cm$^{-1}$). The absorbance at 4324 cm$^{-1}$ was used as a reference band.

The propylene homo- and/or copolymer can be prepared in processes generally known to the man skilled in the art. The catalyst used in the polymerisation process is not particularly critical and can for example be a Ziegler-Natta catalyst or a single site catalyst.

Generally the melt flow rate (MFR) for a suitable polypropylene is between 10 and 40 g/10min. The MFR for the polypropylene polymer is determined according to ISO standard 1133, at a temperature of 230 °C and under a load of 2.16 kg. Irrespective of the exact nature of the polypropylene, it is preferred that the MFR is between 20 and 30 g/10min, preferably the MFR is at least 15 g/10min, more preferably at least 18 g/10min and most preferably at least 21 g/10min. Polypropylene with a higher MFR tends to be produced faster in injection moulding and parts with long flow paths are better produced with a polypropylene with high MFR.

It is preferred to have a MFR of at most 35 g/10min, more preferably 28 g/10min and most preferably 27 g/10min. Polypropylene with a lower MFR tends to have better impact behaviour. A preferred range for the MFR is 15-35 g/10min, more preferably 18-28 g/10min, even more preferably 21-27 g/10min, most preferably the MFR is at least 20 and at most 24 g/10min.

The composition that is being used to reduce sink marks in an injection moulded article comprises next to the at least one polypropylene polymer also at least one polyethylene polymer. When the polyethylene polymer A2 comprises more than 1 type of polyethylene, the properties given below apply for all the polyethylene polymers in the polyethylene polymer A2. For the polyethylene in principle any type of polyethylene can be used. The melt flow rate (MFR) of the polyethylene polymer used in the composition can be chosen between wide ranges and is normally chosen so as to fit the further processing conditions. The MFR for the polyethylene polymer is determined according to ISO standard 1133, at a temperature of 190 °C and under a load of 2.16 kg. It is preferred to use for the at least one polyethylene polymer a polyethylene polymer that has a MFR (190°C, 2.16 kg) of 5-50 g/10min. More preferably the MFR is between 10 and 45 g/10min. Most preferably the MFR is between 15 and 35 g/10min. A higher MFR is advantageous because the sink marks tend to be less than with lower MFR's.

In another embodiment of the invention the polyethylene that is used in the polymer composition is a polyethylene generally known as HDPE, high density polyethylene. HDPE is generally used for a polyethylene with a density in the range of 940-970 kg/m$^3$. The density is determined according to ISO standard 1183A. The HDPE used in the present invention preferably has a density between 950 and 965 kg/m$^3$, more preferably between 955 and 964 kg/m$^3$, even more preferably between 958 and 962 kg/m$^3$.

The man skilled in the art of polyethylene production knows how to make this type of polyethylene. Generally, HDPE is produced in a process with relatively low pressure, compared to the high pressure PE process that results in the formation of LDPE. In the low pressure PE process a catalyst is used, generally a catalyst of the Ziegler-Natta type, the chromium- type or a single site catalyst. Preferably a Ziegler-Natta catalyst is used as production with Ziegler-Natta catalysts tends to be more economical. The HDPE as used in the present embodiment of the invention can contain low amounts of comonomer that may be necessary to regulate the properties of the HDPE produced.

In another embodiment the at least one polyethylene polymer is a polyethylene polymer with a combination of properties. It is preferred to use a polyethylene polymer with a MFR of at least 0.1 g/10min and a density of at least 910 kg/m$^3$. Preferably the polyethylene has a MFR of at least 5 g/10min and a density of at least 915 kg/m$^3$, more preferably a MFR of 20 g/10min and a density of at least 950 kg/m$^3$. It is preferred to have the combination of MFR not being higher than 50 g/10min and the density lower than 970 kg/m$^3$; it is more preferred to have the combination of MFR not being higher than 40 g/10min and the density lower than 965 kg/m$^3$.

The polymer composition for use in the present invention comprises at least one polypropylene polymer A1 and at least one polyethylene polymer A2 wherein the polymer composition does not contain any other polymer than the polypropylenes A1 and the polyethylenes A2 and the total amount of polypropylene is at least 50 wt% based on the sum of the polypropylene polymer A1 and the polyethylene polymer A2 in the composition. As the man skilled in the art knows, optionally one or more additives and/or one or more fillers and/or one or more colorants can be present in the composition.

The amount of polypropylene A1 in the polymer composition should generally be chosen such that polypropylene makes up the major part of the polymers in the polymer composition. Thus generally the total amount of polypropylene is at least 50 wt% based on the sum of the polypropylene polymer A1 and the polyethylene polymer A2 in the composition. Preferably the amount of propylene is at least 75 wt% based on the sum of A1 and A2 present in the polymer composition, more preferably this amount is at least 83 wt%. The amount of polypropylene in the polymer composition is below 100 wt%, based on the sum of the polypropylene polymer A1 and the polyethylene polymer A2 in the composition. When the polypropylene would be 100 wt%, no polyethylene would be present, while the presence of polyethylene is required for the present invention. Preferably the amount of polypropylene A1 is less than 95 wt%, more preferably less than 92 wt% based on the sum of the polypropylene polymer A1 and the polyethylene polymer A2 in the composition. Generally a suitable range for the amount of polypropylene A1 is between 50 wt% and less than 100 wt%, preferably between 75 wt% and 95 wt%, more preferably between 83 wt% and 92 wt% based on the sum of the polypropylene polymer A1 and the polyethylene polymer A2 in the composition. When more than one type of polypropylene is present in the polymer composition they are counted together and the sum of their amounts should be within the indicated ranges. However it is preferred that the composition comprises only one polypropylene polymer A1.

The amount of polyethylene in the polymer composition should generally be chosen such that polyethylene makes up the minor part of the polymers in the polymer composition. Thus the total amount of polyethylene is less than 50 wt% based on the sum of all polymeric components in the polymer composition. Preferably the amount of polyethylene is less than 25 wt%, more preferably less than 17 wt%. When more than one type of polyethylene is present in the polymer composition they are counted together and the sum of their amounts should be within the indicated ranges. However it is preferred that the composition comprises only one polyethylene polymer A2.

The polymer composition does not contain any other polymer than the polypropylenes A1 and polyethylenes A2. Thus, the amount of other polymers is 0 wt%.

The invention relates to the use of the above described composition to reduce sink marks in an injection moulded article. Injection moulding is a well-known technique to convert polymeric compositions into shaped articles. The man skilled in this art knows how to practice this technique. Reference can for example be made to the chapter 'injection moulding' in the Encyclopedia of Polymer Science and Technology, John Wiley & Sons, 2011.

Injection moulding is a technique that is used to create all kinds of articles. It is one of the most common techniques for producing parts from polymers. Examples of articles produced by injection moulding are consumer goods such as major appliances, sometimes also referred to as 'white goods', such as for example cookers, microwave ovens, dish washers, dryers, washing machines, tumblers, refrigerators, freezers and air conditioners. Further examples include small appliances, also referred to as 'brown goods', such as for example a vacuum cleaner, electric kettle, coffee- and tea- maker, (steam) iron, mixer, egg-boiler, toaster, juicer, kitchenaid, blender, ice machine, rice cooker, popcorn-maker, water-dispenser, soda-maker, ventilator, power tool, shaver, epilator, device for dental hygiene, fever thermometer, motor housing, air-conditioning-device, air purifier, humidifier and dehumidifier. Not only the complete article can be made by injection moulding, it is of course also possible to make only one or more parts of such an article. It is preferred to use the composition comprising at least one polypropylene polymer and at least one polyethylene polymer for the production of an injection moulded part of a consumer product. In this area of use the advantages brought by the invention are most pronounced as generally in consumer goods the aesthetics, total appearance, ease of use and cleaning abilities are very important.

The invention will be demonstrated in the following examples, without being limited to them.

## Examples

To determine sink marks in an injection moulded article, a test plaque is produced out of the composition to be tested. The test plaque is then evaluated for the presence of sink marks.

## Preparation of the compositions:

Various compositions are prepared, each by blending one polypropylene material and one polyethylene material. The polypropylene is a heterophasic ethylene- propylene copolymer, commercially available from Borealis with MFR (230°C, 2.16 kg) of 22 g/10min. For the polyethylene material different types are used in the different compositions. All PE grades are Ziegler- Natta type materials, commercially available from Borealis. The amount of polyethylene is in all compositions 10 wt% (based on the final composition). Further talc (2.5 wt%), anti-oxidant (0.44 wt%) and acid- scavenger (0.06 wt%) are added (amounts based on the final composition).

Compounding was done using a Coperion ZSK18 Megalab machine, featuring a co-rotating double screw (diameter 18 mm) at 300 RPM. The average material loading into the extruder was around 8 kg/h and the average temperature profile in the extruder was not above 200°C.

Further details of the compositions prepared are as shown in Table I.

Table I: Compositions

|  | Example 1 | Example 2 | Example 3 | Example 4 |
|---|---|---|---|---|
| MFR of final composition (g/10 min) (230°C/2,16 Kg) | 22.7 | 20.4 | 20.8 | 16.7 |
| PP base polymer (wt% *) | 87 | 87 | 87 | 87 |
| Talc (wt% *) | 2.5 | 2.5 | 2.5 | 2.5 |
| Other additives (wt% *) | 0.5 | 0.5 | 0.5 | 0.5 |
| PE type | HDPE | HDPE | LDPE | HDPE |
| PE polymer (wt% *) | 10 | 10 | 10 | 10 |
| PE MFR (g/10 min) (190°C/2,16 Kg) | 31 | 8 | 15 | 0,5 |
| PE density (kg/m$^3$) | 960 | 964 | 915 | 958 |
| Based on the final composition | | | | |

Injection moulding of the test plaque:

The compositions as prepared above are injection moulded in a mould so as to obtain a test plaque with ribs of various dimensions. Injection moulding is performed under two conditions:

- C1) Mass temperature of 260°C, cooling temperature of 60°C, injection moulding back pressure 100 bar. This back pressure is maintained for 10 s.
- C2) Mass temperature of 220°C, cooling temperature of 20°C, injection moulding back pressure 500 bar. The back pressure is maintained for 10 s.

The obtained test plaque has the dimensions of 150 mm in width, 200 mm in length and 2 mm in thickness. The test plaque contains three rows of ribs. The three rows are evenly spread over the length of the test plaque. One row of ribs contains 9 ribs, consecutively named A, B, C, D, E, F, G, H and J. Therefore in total 27 ribs (3 rows of each 9 ribs) are present on the test plaque.

In the determination of the sink marks, the 2 most outward located ribs on each side of the row, namely A, B on one side of the row and H and J on the other side of the row are not included into the evaluation. This is done to exclude errors because of experimental difficulties in the handling of the test plaque near the edges of the plaque. Therefore, per row five ribs are left to be taken into account when performing the sink mark measurements. The fifth rib in each row, rib E, is also referred to as 'the central rib'.

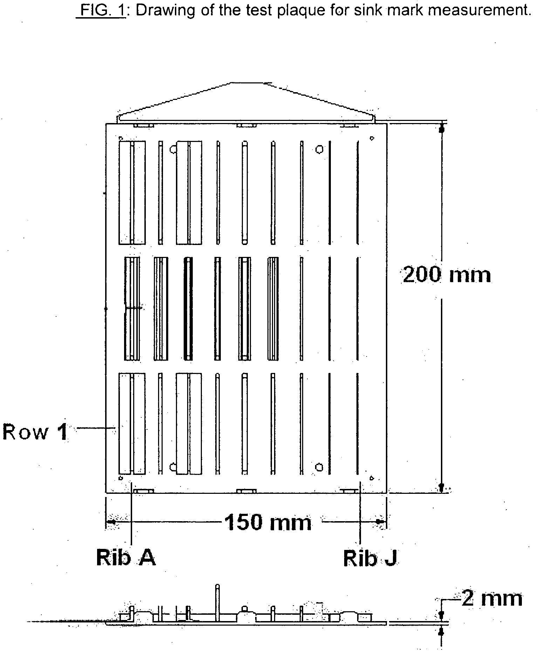

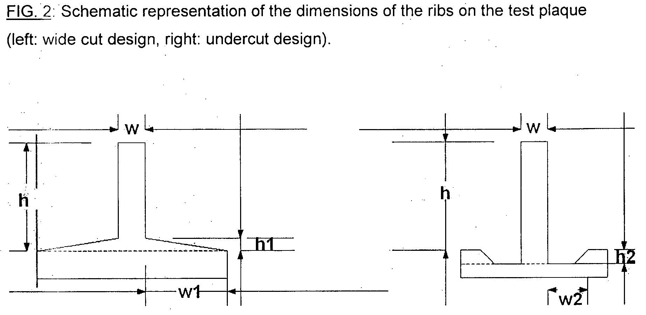

A schematic drawing, in top view and side view, of the test plaque is given in Figure 1. A schematic representation of the dimensions of the ribs is shown in Figure 2. The numerical values for each of the various dimensions of each rib are given in Table II. For a standard rib (not wide cut nor undercut) the values for the width (w) and the height (h) of the rib are given. These values are sufficient to define the relevant dimensions of the rib. Where the rib is wide cut (as with some of the ribs in row 1 and 3 of the test plaque), additionally the values for w1 and h1 are given. Where the ribs are undercut (as with some of the ribs in row 2 in the test plaque), additionally the values for w2 and h2 are given. The ribs are identified by their width and height. So for example, the first rib (A) in the first row will be referred to as 2.0/8, the fourth rib (D) in the second row will be referred to as 1.3/8 and the ninth rib (J) in the third row will be referred to as 0.65/4. As the tendency of the formation of sink marks increases with increasing width of the ribs, or decreasing thickness of the plaque, the ratio (rib width over plaque thickness) is calculated.

$$\frac{\text{rib width}}{(\text{plaque thickness})} * 100\%$$

Therefore the ratio for rib C (wide cut) in the first row is 43 and the ratio for rib E (undercut) in the second row is 200.

The position of the sink mark will be indicated with reference to the dimension of the rib on the opposite side of the test plaque. Therefore, when a sink mark occurs on the opposite side of the test plaque at the location of the second rib (B) in the third row, the sink mark is referred to as 2.0/20. Thus, hereinafter it will not be referred to explicitly anymore that the sink mark and the rib are on opposite sides of the test plaque.

Table II: Dimensions of the ribs on the test plaque for sink mark measurement.

| | | A | B | C | D | E | F | G | H | J |
|---|---|---|---|---|---|---|---|---|---|---|
| Ribs in row 1 | | | | | | | | | | |
| w | | 2 | 2 | 1.3 | 1.3 | 2 | 1.6 | 1.3 | 1 | 0.65 |
| h | [mm] | 8 | 20 | 8 | 20 | 8 | 8 | 8 | 4 | 4 |
| w1 | | 6 | | 6 | | | | | | |
| h1 | | 1 | | 1 | | | | | | |
| Ribs in row 2 | | | | | | | | | | |
| w | | 2 | 1.3 | 2 | 1.3 | 2 | 1.3 | 1.3 | 1 | 0.65 |
| h | [mm] | 8 | 8 | 8 | 8 | 8 | 8 | 8 | 4 | 4 |
| w2 | | 3 | 3 | 1 | 1 | 2 | 2 | | | |
| h2 | | 1 | 1 | 1 | 1 | 1 | 1 | | | |
| Ribs in row 3 | | | | | | | | | | |
| w | | 2 | 2 | 1.3 | 1.3 | 2 | 1.6 | 1.3 | 1 | 0.65 |
| h | [mm] | 8 | 20 | 8 | 20 | 8 | 8 | 8 | 4 | 4 |
| w1 | | 6 | | 6 | | | | | | |
| h1 | | 1 | | 1 | | | | | | |

Procedure for sink mark measurement of the injection moulded test plaque

The occurrence and size of sink marks in an injection moulded test plaque is determined according to the method described below. The machine to perform the measurements is custom made. The machine is mainly made out of steel and contains a micrometer to measure the depth of the sink marks on the plaque. The micrometer has an error margin of $\pm$ 10 micrometer.

The machine has supporting means and two pressure rolls for holding the test plaque in position. The test plaque is positioned between the supporting means and the pressure rolls, with the side of the test plaque with the ribs facing downwards. The side of the test plaque that could display the sink marks is thereby facing upwards. The micrometer is moveably mounted on an axis. The axis is parallel to the length of the test plaque. This arrangement makes it possible to slide the micrometer to a position above one of the three rows with ribs on the test plaque. The test plaque itself can be moved perpendicular to the axis with the micrometer. In this way, with the micrometer in a fixed position on its axis, sink marks that occur in one row can be measured. Thus by the movement of the micrometer along its axis, the 3 rows of ribs can be accessed and by the movement of the plaque underneath the axis with the micrometer, the sink marks in one row can be measured.

For the evaluation of the occurrence of sink marks, four test plaques are moulded out of a composition. Each test plaque is then evaluated for the occurrence and depth of sink marks. The value used in the evaluation for each position is therefore taken as the average of the four measurements on the four test plaques for the same position. A detailed description of the measurement is given hereafter.

The test plaque is positioned between the supporting means and pressure rolls of the machine. The ribs are facing downward, towards the supporting means. The sink marks, which occur on the opposite side of the ribs, are facing upwards, towards the micrometer. The pressure rolls are tightened so as to be into close contact with the test plaque and thereby keeping the test plaque flat on the supporting means of the machine.

To set up a zero- measurement, a flat area between two sink marks is chosen. The most reliable position was found to be the position in the middle of the ribs F and G. The zero- measurement is repeated after the movement of the micrometer to another row of ribs. After the zero is set for one row of sink marks, the plate is scrolled underneath the micrometer to the position of the first sink mark to be determined. The depth of the sink mark is determined by the movement of the needle of the micrometer until it touches the bottom of the sink mark. The amount of the movement of the needle of the micrometer (the depth of the sink mark) compared to the zero- point measurement is now read from the micrometer. The test plaque is scrolled underneath the micrometer to the following sink mark that needs to be determined. As stated before the two most outward located ribs on each side of the row namely A, B on one side of the row and H and J on the opposite side of the row are not included into the evaluation. This is done to exclude errors because of the handling of the test plaque near the edges of the plaque. After the sink mark connected to the central rib has been measured, the plaque is removed from between the pressure rolls and the supporting means. It is rotated for 180° in the same plane and placed in between the pressure rolls and the supporting means again. This is being done to exclude a possible influence of a potential different pressure of the second pressure roll compared to the first pressure roll. When both pressure rolls wouldn't apply the same pressure onto the test plaque, it would be possible that it could cause a different reading from the micrometer in the determination of the depth of the sink marks. After the rotation-in-plane by 180°, the zero value is re-set. The depth of the sink marks connected to the rest of the ribs in the same row is now determined.

The micrometer is now slid along its axis to a position above the second row of ribs and the sink marks in the second row are determined in the same way as described above for the sink marks in the first row. The same is repeated for the sink marks in the third row. After all measurements on the first test plaque are performed, the test plaque is removed from between the pressure rolls and the supporting means. The same procedure is repeated for 3 other test plaques made out of the same composition. After all data for all sink marks in all rows, on all four plates are collected, the average of the four data for every sink mark is calculated.

Experiments

*A. Influence of the moulding conditions and the composition on the dimensions of the sink marks*

In this set of experiments (A), the compositions are moulded into plaques under two sets of moulding conditions:

- C1) Mass temperature of 260°C, cooling temperature of 60°C, injection moulding back pressure 100 bar. This back pressure is maintained for 10 s.
- C2) Mass temperature of 220°C, cooling temperature of 20°C, injection moulding back pressure 500 bar. The back pressure is maintained for 10 s.

In this experimental set up, the composition of example 1 (see Table I) is compared to the unmodified polypropylene grade that is used in the compostions as the base resin. The experiment with the base resin is therefore a comparative example.

Table III: Influence of moulding conditions on dimensions of sink marks.

| Rib | Rib ratio | Sink mark depth in central row (micrometer) | | | |
|---|---|---|---|---|---|
| | | *Conditions C1* | | *Conditions C2* | |
| | | Example 1 | Comparative | Example 1 | Comparative |
| C | 200 | 10 | 16 | 16 | 48 |
| D | 130 | 26 | 6 | 11 | 38 |
| E | 200 | 115 | 139 | 28 | 97 |
| F | 130 | 106 | 108 | 28 | 79 |
| G | 65 | 14 | 18 | 29 | 35 |

It was found that the composition according to the present invention (example 1) displays overall better results than the comparative example. Therefore it can be concluded that the addition of polyethylene to the polypropylene resin improves the behaviour of the composition with respect to sink marks.

Further it could be derived from above experiments that the set of moulding conditions C1 (with the higher mass temperature and the lower back pressure) was more critical than the set of conditions indicated with C2 (with the lower mass temperature and the higher back pressure). This behaviour applied both to the composition according to the present invention as well as to the base resin, representing the comparative example.

With 'more critical' is meant in this context that the occurrence of sink marks tend to be more pronounced. Thus sink marks tend to be deeper under the more critical conditions C1 compared to the less critical conditions C2.

*B. Influence of the composition on the dimensions of the sink marks*

In this set of experiments the influence of the composition, in particular the influence of the polyethylene component, on the dimensions of the sink marks was evaluated. The compositions as indicated in Table I were all moulded into test plaques under the same moulding conditions. The moulding conditions according to the more critical set-up, condition C1 (mass temperature of 260°C, cooling temperature of 60°C, back pressure of 100 bar, which is kept for 10 s) were used. The results of the measurements on the sink marks in relation to the composition are reported in Table IV.

For each composition, the average of all sink mark measurements is taken. Thus as stated above, for each composition four test plaques were moulded.

Each test plaque contains three rows with each nine ribs, thus resulting in a total of 27 ribs, and thus 27 sink marks. From the nine ribs in a row, the two most outward located ribs on each side are not taken into account so as to prevent inaccurate measurements because of effects occurring near the edges. Therefore each row results in 5 measurements and thus each plaque results in 15 measurements. With four plaques per composition, the average for one composition is thus taken from 60 measurements.

Table IV: Influence of composition on dimensions of sink marks.

|  | Average sink mark depth (micron) |
|---|---|
| Example 1 | 54 |
| Example 2 | 65 |
| Example 3 | 63 |
| Example 4 | 81 |

It can be concluded from the experiments A and B that the modification of the polypropylene polymer as base resin with polyethylene polymer results in an improved behaviour towards sink marks. Further it can be concluded that the addition of a polyethylene polymer with a higher MFR and/or a polyethylene of the HDPE- type, improves the sink mark behaviour more than the addition of a polyethylene polymer with a lower MFR.

**Claims**

1. Use of a polymer composition to reduce sink marks in an injection moulded article, the polymer composition comprising:

   A1) at least one polypropylene polymer selected from propylene homopolymer, co-polymers of propylene and ethylene and co-polymers of propylene, ethylene and/or one or more alpha-olefins with 4 to 18 carbon atoms, wherein the amount of propylene in the co-polymers is at least 80 wt%, and
   A2) at least one polyethylene polymer,

   wherein the polymer composition does not contain any other polymer than the polypropylenes A1 and the polyethylenes A2 and the total amount of polypropylene is at least 50 wt% based on the sum of the polypropylene polymer A1 and the polyethylene polymer A2 in the composition.

2. Use according to claim 1 **characterised in that** the composition comprises at least 60 wt% of polypropylene polymer A1 and at most 40 wt% of polyethylene polymer A2, the amount being based on the sum of A1 and A2 present in the polymer composition.

3. Use according to claim 1 or 2 **characterised in that** polypropylene polymer A1 comprises at least one copolymer of propylene and ethylene or at least one copolymer of propylene, ethylene and one or more $\alpha$-olefins with 4-18 carbon atoms.

4. Use according to claim 3 **characterised in that** the at least one polypropylene copolymer is a block copolymer.

5. Use according to anyone of claim 1-4 **characterised in that** the at least one polypropylene polymer has a MFR (230°C, 2.16 kg) of 20-30 g/10min.

**6.** Use according to anyone of claim 1-5 **characterised in that** the at least one polyethylene polymer has a MFR (190°C, 2.16 kg) of 5-50 g/10min.

**7.** Use according to anyone of claim 1-6 **characterised in that** the density of the polyethylene is 940-970 kg/cm$^3$ (ISO standard 1183A).

**8.** Use according to anyone of claims 1-7 for the production of an injection moulded part of a consumer product.

**Revendications**

**1.** Verwendung einer Polymer-Zusammensetzung zur Verminderung von Einfall-Stellen in einem Spritzgieß-geformten Gegenstand, wobei die Polymer-Zusammensetzung umfasst:

A1) mindestens ein Polypropylen-Polymer, ausgewählt aus Propylen-Homopolymer, Co-Polymeren von Propylen und Ethylen und Co-Polymeren von Propylen, Ethylen und/oder einem oder mehreren alpha-Olefinen mit 4 bis 18 Kohlenstoff-Atomen, wobei die Menge von Propylen in den Co-Polymeren mindestens 80 Gew.-% ist, und
A2) mindestens ein Polyethylen-Polymer,

wobei die Polymer-Zusammensetzung kein beliebiges anderes Polymer als die Polypropylene A1 und die Polyethylene A2 enthält und die Gesamtmenge von Polypropylen mindestens 50 Gew.-% ist, basierend auf der Summe des Polypropylen-Polymers A1 und des Polyethylen-Polymers A2 in der Zusammensetzung.

**2.** Verwendung nach Anspruch 1, **dadurch gekennzeichnet, dass** die Zusammensetzung mindestens 60 Gew.-% von Polypropylen-Polymer A1 und höchstens 40 Gew.-% von Polyethylen-Polymer A2 umfasst, wobei die Menge auf der Summe von in der Polymer-Zusammensetzung vorliegendem A1 und A2 basiert.

**3.** Verwendung nach Anspruch 1 oder 2, **dadurch gekennzeichnet, dass** das Polypropylen-Polymer A1 mindestens ein Copolymer von Propylen und Ethylen oder mindestens ein Copolymer von Propylen, Ethylen und einem oder mehreren $\alpha$-Olefinen mit 4-18 Kohlenstoff-Atomen umfasst.

**4.** Verwendung nach Anspruch 3, **dadurch gekennzeichnet, dass** das mindestens eine Polypropylen-Copolymer ein Block-Copolymer ist.

**5.** Verwendung nach einem von Anspruch 1-4, **dadurch gekennzeichnet, dass** das mindestens eine Polypropylen-Polymer eine MFR (230°C, 2,16 kg) von 20-30 g/10 min aufweist.

**6.** Verwendung nach einem von Anspruch 1-5, **dadurch gekennzeichnet, dass** das mindestens eine Polyethylen-Polymer eine MFR (190°C, 2,16 kg) von 5-50 g/10 min aufweist.

**7.** Verwendung nach einem von Anspruch 1-6, **dadurch gekennzeichnet, dass** die Dichte des Polyethylens 940-970 kg/cm$^3$ (ISO-Standard 1183A) ist.

**8.** Verwendung nach einem der Ansprüche 1-7 zur Herstellung eines Spritzgieß-geformten Teils von einem VerbraucherProdukt.

**Patentansprüche**

**1.** Utilisation d'une composition de polymere pour réduire les retassures dans un article moule par injection, la composition de polymere comprenant :

A1) au moins un polymere de polypropylene choisi parmi un homopolymere de propylene, les copolymeres de propylene et d'ethylene, et les copolymeres de propylene, d'ethylene et/ou d'une ou plusieurs $\alpha$-olefine(s) possédant 4 à 18 atomes de carbone, la quantité de propylene dans les copolymeres étant d'au moins 80 % en poids, et
A2) au moins un polymere de polyethylene,

dans laquelle la composition de polymere ne contient aucun autre polymere que les polypropylenes A1 et les polyethylenes A2, et la quantité totale de polypropylene est d'au moins 50 % en poids par rapport à la somme du polymere de polypropylene A1 et du polymere de polyethylene A2 dans la composition.

2. Utilisation selon la revendication 1, **caractérisée en ce que** la composition comprend au moins 60 % en poids de polymere de polypropylene A1 et au plus 40 % en poids de polymere de polyethylene A2, les quantités etant rapportées à la somme d'A1 et d'A2 se trouvant dans la composition de polymère.

3. Utilisation selon la revendication 1 ou 2, **caracterisee en ce que** le polymere de polypropylene A1 comprend au moins un copolymere de propylene et d'ethylene ou au moins un copolymere de propylene, d'ethylene et d'une ou plusieurs $\alpha$-olefine(s) possédant 4 à 18 atomes de carbone.

4. Utilisation selon la revendication 3, **caracterisee en ce que** l'au moins un copolymere de polypropylene est un copolymere séquencé.

5. Utilisation selon l'une quelconque des revendications 1 à 4, **caractérisée en ce que** l'au moins un polymere de polypropylene presente un MFR (230°C, 2,16 kg) de 20 à 30 g/10 min.

6. Utilisation selon l'une quelconque des revendications 1 à 5, **caractérisée en ce que** l'au moins un polymere de polyethylene presente un MFR (190°C, 2,16 kg) de 5 à 50 g/10 min.

7. Utilisation selon l'une quelconque des revendications 1 à 6, **caractérisée en ce que** la masse volumique du polyethylene est de 940 à 970 kg/cm$^3$ (norme ISO 1183 A).

8. Utilisation selon l'une quelconque des revendications 1 à 7, pour la production d'une piece moulee par injection d'un produit de consommation.

FIG. 1: Drawing of the test plaque for sink mark measurement.

FIG. 2: Schematic representation of the dimensions of the ribs on the test plaque (left: wide cut design, right: undercut design).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1358266 A
- EP 0232522 A2
- US 20020132100 A1
- US 4002595 A
- US 4038042 A
- EP 0677369 A1

### Non-patent literature cited in the description

- **KOCH ; MACHL.** *Polymer Testing,* 2007, vol. 26, 927-936
- *Thermochimica Acta,* 1990, vol. 66, 53-68
- injection moulding. Encyclopedia of Polymer Science and Technology. John Wiley & Sons, 2011